# EUROPÄISCHE PATENTSCHRIFT

(11) **EP 1 056 058 B1**
(45) Veröffentlichungstag und Bekanntmachung des Hinweises auf die Patenterteilung: **16.04.2003**
(21) Anmeldenummer: 00110288.8
(22) Anmeldetag: 23.05.2000
(51) Int. Cl.: G07F 7/10

(54) **Verfahren zum Überwachen von Sicherheitsverletzungen in einem Datenverarbeitungssystem insbesondere für Chipkarten**
Monitoring breaches of security in a data processing system, in particular smartcards
Surveillance des violations dans un système de traitement de données en particuler dans un carte à microcircuit

(30) Priorität: 28.05.1999 DE 19924652
(43) Veröffentlichungstag der Anmeldung: 29.11.2000
(73) Patentinhaber: Giesecke & Devrient GmbH, 81677 München (DE)
(72) Erfinder: Kohlbeck, Alexander, 82362 Weilheim (DE); Stocker, Thomas, 81673 München (DE)
(74) Vertreter: Klunker . Schmitt-Nilson . Hirsch

(56) Entgegenhaltungen:
- DE-A- 4 126 213
- DE-A- 4 321 849
- FR-A- 2 674 647
- US-A- 4 667 087
- US-A- 4 798 941
- US-A- 4 983 816

## Beschreibung

Die Erfindung betrifft ein Verfahren des Überwachens von Sicherheitsverletzungen in einem Datenverarbeitungssystem, einer Chipkarte, in welcher verschiedene Softwareanwendungen aktivierbar sind, deren Ausführung mindestens einer Sicherheitsbeschränkung unterliegt.

Es gibt Chipkarten für verschiedene Anwendungen, beispielsweise gibt es Telefonkarten, Bank-Servicekarten, Kreditkarten in Form von Chipkarten, außerdem als Zugangsschlüssel dienende Chipkarten und ähnliches. Bei einigen dieser Chipkarten enthält der Chip einen Wertespeicher, und die darin gespeicherten Werte werden bei Verbrauch entsprechend gelöscht, wie es zum Beispiel bei einer Telefon-Chipkarte der Fall ist. Bei Bank-Servicekarten, die das Abheben von Bargeld am Automaten ermöglichen, ist für den Betrieb des in der Chipkarte enthaltenen Datenverarbeitungssystems Voraussetzung, daß der Benutzer die zu der Karte gehörige PIN richtig in ein Datenendgerät eingibt. Die Softwareanwendung bei einem solchen Datenverarbeitungssystem beinhaltet zum einen eine Überprüfung, um festzustellen, ob die richtige PIN eingegeben wurde, zum anderen auch eine Überwachung falsch eingetippter PINs. Jede falsch eingetippte PIN stellt eine Sicherheitsverletzung dar und wird von einem Fehlerzähler registriert. Bei drei Falscheingaben der PIN wird die Chipkarte üblicherweise gesperrt.

Um ein Analysieren und Nachbilden von Chipkarten zu unterbinden, ist bereits ein Verfahren zum Überwachen von Sicherheitsverletzungen vorgeschlagen worden, bei dem ein zeitlich hintereinander erfolgender gegenseitiger Transfer von Zufallszahlen zwischen der Chipkarte und dem Datenendgerät erfolgt, woran sich jeweils eine Identitätsprüfung mit Hilfe eines Prüfalgorithmus anschließt. Ein Fehlerzähler erfaßt die Anzahl fehlgeschlagener Authentifizierungen.

Die obigen Beispiele beziehen sich auf Chipkarten, die jeweils für eine einzige Anwendung ausgelegt sind, zum Beispiel als Telefonkarte, Bank-Servicekarte, etc. verwendet werden. Inkorporiert man in eine Chipkarte mehrere Anwendungen, um ein und dieselbe Chipkarte zum Telefonieren, zum Abheben von Bargeld, als Türöffner für Sicherheitsräume oder ähnliches zu verwenden, so kann man natürlich von dem bekannten Prüf- und Überwachungsverfahren der oben angesprochenen Art Gebrauch machen, das heißt, die Benutzung der Chipkarte hängt ab von der richtigen PIN-Eingabe, und bei mehrmaliger Falscheingabe erfolgt ein Sperren der Karte.

Diese Einmalüberprüfung und -überwachung kann sich als problematisch erweisen. Beispielsweise könnte jemand in betrügerischer Weise versuchen, über eine Anwendung, für die Berechtigung besteht, Zugang zu einer anderen Anwendung zu erlangen, für die keine Berechtigung besteht. Nach der Überwindung der durch die PIN gebildeten Hürde besteht im Stand der Technik praktisch keine weitere Überwachungsmöglichkeit mehr. Dies ist deshalb besonders problematisch, weil nach einer erfolgreichen Überwindung der durch die PIN gebildeten Sicherheitshürde praktisch unbegrenzt viele, vermeintlich berechtigte Benutzungen der Chipkarte möglich sind. Durch diese gleichsam freie Benutzung der Karte hat ein Betrüger die Möglichkeit, das Datenverarbeitungssystem gezielt zu manipulieren.

Besonders lohnenswert erscheinen dem Betrüger dann Attacken auf solche Anwendungen, die die Erlangung eines geldwerten Vorteils möglich machen.

Der Erfindung liegt die Aufgabe zugrunde, ein Verfahren zum Überwachen von Sicherheitsverletzungen in einem Datenverarbeitungssystem einer Chipkarte anzugeben, bei dem sich bestimmte Softwareanwendungen gezielt auch dann schützen lassen, wenn eine generelle Berechtigungsprüfung, insbesondere mittels PIN-Eingabe, positiv verlaufen ist.

Zur Lösung dieser Aufgabe schlägt die Erfindung ein Überwachungsverfahren für ein Datenverarbeitungssystem mit verschiedenen aktivierbaren Softwareanwendungen in einer Chipkarte vor, bei dem für jede zwecks Sicherung beschränkte Anwendung ein Fehlerzähler eingerichtet wird, dessen Inhalt die einzelnen Sicherheitsverletzungen registriert.

Bei Chipkarten, sind mehrere Softwareanwendungen in einer einzelnen Karte möglich. Typischerweise werden diese einzelnen Softwareanwendungen als Paket in den Chip geladen. Durch die erfindungsgemäßen separaten Fehlerzähler werden dann all diejenigen Versuche registriert, die darauf abzielen, Programmschritte durchzuführen, für die keine Berechtigung besteht.

Das erfindungsgemäße Verfahren betrifft die Sicherheitsüberwachung bei einer Chipkarte, die eine erste Anwendung und eine zweite Anwendung aufweist, beispielsweise einerseits als Türöffner und andererseits als Bank-Servicekarte fungiert. Die Software ist für jede Anwendung spezifisch, jeder Softwareanwendung ist ein eigener Speicherbereich zugeordnet, wobei die Software der einen Anwendung nicht auf den Speicher der anderen Anwendung zugreifen darf und umgekehrt. Stellt sich im Zuge des Programmablaufs heraus, daß die erste Anwendung auf den Speicherbereich der zweiten Anwendung zugreift, so stellt dies eine Sicherheitsverletzung dar und wird in dem Fehlerzähler der ersten Anwendung registriert. Der versuchte Zugriff der ersten Anwendung auf den Speicherbereich der zweiten Anwendung ist bei ordnungsgemäßem Programmablauf nicht vorgesehen, so daß dieser Zugriff als versuchte Manipulation, also Sicherheitsverletzung interpretiert wird. Bei mehreren derartigen Versuchen kann eine entsprechende Maßnahme eingeleitet werden, zum Beispiel kann die Anwendung, die den unberechtigten Zugriff versucht hat, gesperrt werden.

Ein unberechtigter Speicherzugriff kann aber auch durch Programmierfehler, Datenverfälschung und dergleichen zustande kommen. Bei sehr selten vorkommenden Sicherheitsverletzungen kann man mit einiger Berechtigung davon ausgehen, daß diese Verletzungen nicht auf betrügerische Manipulationen zurückzuführen sind. In diesem Fall kann man den betreffenden Fehlerzähler zurückstellen, wenn zwischen zwei Sicherheitsverletzungen eine relativ große Zeitspanne liegt. Zu diesem Zweck sieht die Erfindung in einer Weiterbildung vor, daß zumindest einige der Fehlerzähler zusätzlich mit einem Registrierdatum ausgestattet sind. Bei Abfrage des Fehlerzählers kann dann dieses Registrierdatum des früheren Fehlers mit dem Datum des aktuellen Fehlers, das heißt der aktuellen Sicherheitsverletzung, verglichen werden, um den Fehlerzähler dann gegebenenfalls zurückzusetzen.

Bevorzugt sieht die Erfindung vor, daß bei gleichzeitig mehreren aktiven Anwendungen auch gleichzeitig die entsprechenden Fehlerzähler sämtlich aktiv sind. Hierdurch läßt sich eine umfassende Sicherheitsüberwachung erreichen.

Durch die Erfindung wird nicht nur die Sicherheit bei Chipkarten mit mehreren Anwendungen erhöht, sondern es erfolgt im Gegensatz zu der Überprüfung der PIN auch während des anschließenden Betriebs der Chipkarte eine laufende Sicherheitsüberprüfung.

Mehrmalige Verletzung einer bestimmten Sicherheitsbeschränkung einer Anwendung, erkannt durch einen bestimmten Stand des zugehörigen Fehlerzählers, kann in unterschiedlicher Weise geahndet werden. Möglich ist das Sperren der betreffenden Anwendung und/oder des gesamten Datenverarbeitungssystems. Diese Sperre läßt sich rückgängig machen, beispielsweise nach Verstreichen einer bestimmten Zeitspanne. Das Aufheben der Sperre einer bestimmten Anwendung kann chipintern, das heißt durch das Datenverarbeitungssystem selbst erfolgen. Das Sperren des gesamten Datenverarbeitungssystems macht es erforderlich, daß eine Wiederfreigabe extern erfolgt, das heißt in der Regel durch die Organisation, die die Chipkarte ausgegeben hat.

Gravierender ist die Ahndung einer gehäuften Sicherheitsverletzung einer Anwendung durch Löschen der Software dieser Anwendung. Um diese Anwendung dann wieder mit der Chipkarte nutzen zu können, muß die Software erneut in den Chip geladen werden, was nur mit entsprechender Ausrüstung durch die Ausgabestelle der Chipkarte erfolgen kann. Das Löschen einer speziellen Anwendungssoftware ist deshalb sicherer als das bloße Sperren, da bei einem Datenverarbeitungssystem mit mehreren getrennten Anwendungen zumindest theoretisch die Möglichkeit besteht, daß jemand über die noch zugänglichen Anwendungen versucht, die Sperre aufzuheben.

Im folgenden wird ein Ausführungsbeispiel der Erfindung anhand der Zeichnung näher erläutert.

Es zeigt:
- Figur 1: ein Blockdiagramm eines Datenverarbeitungssystems einer Chipkarte,
- Figur 2: ein Flußdiagramm für eine von mehreren möglichen Anwendungen mit Sicherheitsüberprüfung,
- Figur 3: ein Flußdiagramm einer Prozedur einer Zugriffsberechtigungsprüfung, und
- Figur 4: den schematischen Aufbau eines bevorzugten Fehlerzählers.

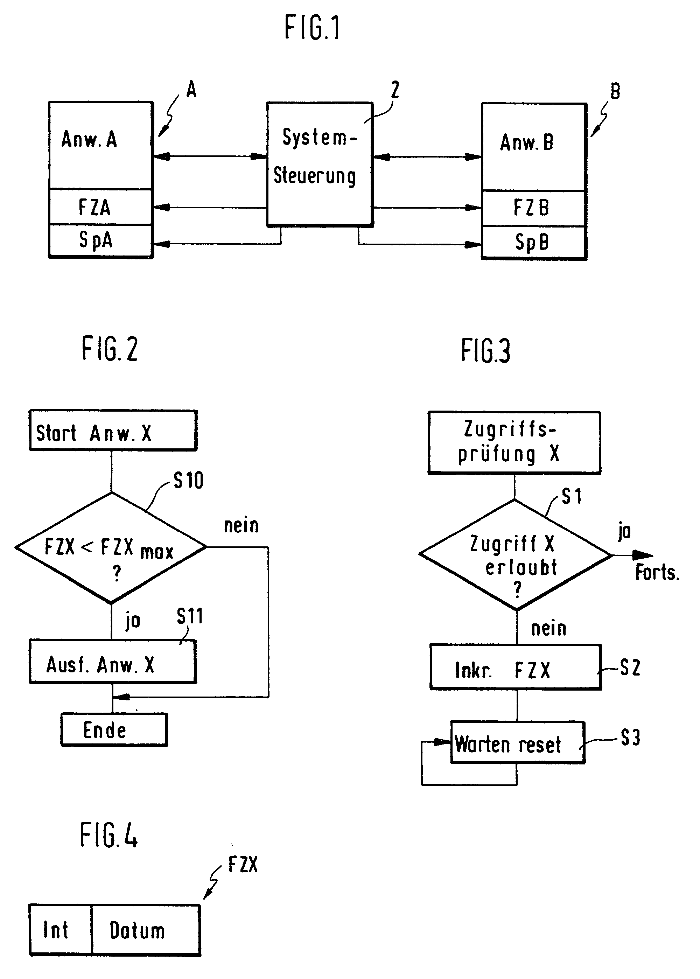

Wie bereits erwähnt, findet die vorliegende Erfindung Verwendung bei einer Chipkarte. In Figur 1 ist das Datenverarbeitungssystem einer solchen Chipkarte teilweise schematisch dargestellt. Eine Systemsteuerung 2 ist für den Ablauf des Betriebs des Datenverarbeitungssystems insgesamt zuständig. Mit der Systemsteuerung 2 sind zwei Modulen A und B gekoppelt. Die Module A und B haben im Prinzip ähnlichen Aufbau. Das Modul A enthält eine Anwendung A, das heißt ein Programm, welches eine bestimmte Anwendung abwickelt, beispielsweise sämtliche in Verbindung mit einer Bargeldabhebung verbundenen Vorgänge. Zu der Anwendung A gehören ein Fehlerzähler FZA und ein Speicherbereich SpA.

Das Modul B hat ähnlichen Aufbau, die einzelnen Elemente tragen gleiche Bezeichnungen, nur statt des Buchstabens "A" den Buchstaben "B". Der Fachmann erkennt, daß anstelle von lediglich zwei Modulen A und B weitere Anwendungsmodule in theoretisch beliebig großer Anzahl vorhanden sein können. Während das Anwendungsmodul A im vorliegenden Beispiel die Funktion einer Bank-Servicekarte haben soll, möge das Anwendungsmodul B die Funktion eines Türöffners haben.

Jedes Modul A und B besitzt einen eigenen Speicherbereich und kann im Betrieb nur auf den ihm zugehörigen Speicherbereich zugreifen. Versucht zum Beispiel die Anwendung A (AnwA) einen Zugriff auf den Speicherbereich SpB des Moduls B, so wird ein solcher Zugriff durch die Systemsteuerung 2 verhindert, und außerdem wird dieser Zugriff vermerkt, indem der Fehlerzähler FZA des Moduls A erhöht wird. Entsprechende Beschränkungen kann es auch für den umgekehrten Zugriff geben, also den Zugriff der Anwendung B auf den Speicherbereich SpA des Anwendungsmoduls A.

Figur 3 zeigt schematisch den Ablauf einer Zugriffsprüfung, wobei "X" stellvertretend für "A" bzw. "B" zu verstehen ist. In einem Entscheidungsschritt S1 wird gefragt, ob das Anwendungsmodul X den angeforderten Zugriff vornehmen darf oder nicht. Der Zugriff besteht hier aus einem Speicherzugriff zu dem Speicher eines anderen Anwendungsmoduls als dem Anwendungsmodul X. Ist der Zugriff erlaubt, so wird der Programmablauf fortgesetzt. Ist der Zugriff nicht erlaubt, so wird der Fehlerzähler des anfordernden Anwendungsmoduls X, das heißt der Fehlerzähler FZX erhöht.

Wenn die in Figur 3 dargestellte Zugriffsprüfung nur selten einen unerlaubten Zugriff feststellt, kann dies als "Zufall" interpretiert werden, so daß man den Fehlerzähler FZX nach einer bestimmten Wartezeit (diese kann Tage, Wochen oder Monate betragen) zurücksetzen kann.

Figur 2 zeigt schematisch den Vorgang der Überprüfung des Fehlerzählers nach dem Start einer Anwendung "X" (hier also entweder A oder B).

Nach dem Start der Anwendung X wird der betreffende Fehlerzähler abgefragt, um zu sehen, ob der Inhalt des Fehlerzählers kleiner ist als der maximale Inhalt (FZXmax). Nur in diesem Fall (ja) erfolgt die Ausführung der Anwendung X. Hat der Fehlerzähler einen Wert, der nicht kleiner ist (also gleich ist) FZXmax, so wird die Anwendung nicht durchgeführt. Diese Sperre kann nach einer Zeit aufgehoben werden, wie rechts unten in Figur 3 angedeutet ist. Dabei kann die Sperre nur die Anwendung X betreffen oder wahlweise die gesamte Chipkarte, d. h. alle zur Verfügung stehenden Anwendugnen.

Der in Figur 2 und in Figur 3 jeweils dargestellte Ablauf kann gleichzeitig für mehrere Anwendungen aktiviert sein.

Figur 4 zeigt den Aufbau eines Fehlerzählers FZX. An den eigentlichen Zählwert (INT entspricht einer ganzen Zahl) schließt sich ein Datum an. Das "Datum" kann ein Kalenderdatum sein, der Begriff umfaßt hier aber auch eine Uhrzeit. Zusätzlich zum Datum der letzten Sicherheitsverletzung kann es auch von Interesse sein zu ermitteln, ob und wann die Chipkate bzw. die gesperrte Anwendung aktiviert wurde. Prinzipiell ist es nämlich sonst möglich, durch Warten das Rücksetzen des Zählers zu erreichen.

Der Warteschritt S3 in Figur 3 kann den Vergleich des "Datums" in Figur 4, also der letzten vorausgegangenen Sicherheitsverletzung mit der laufenden Uhr (Uhrzeit plus Jahrestag) beinhalten. Liegt das "Datum" von FZX eine bestimmte Zeitspanne (zum Beispiel 3 Monate) zurück, wird der Fehlerzähler FZX zurückgesetzt. Dabei kann berücksichtigt werden, ob die Chipkarte bzw. die gesperrte Anwendung während dieses Zeitraums aktiviert wurde.

Neben der beschriebenen Sicherheitsverletzung eines unerlaubten Speicherzugriffs, ist die Überwachung jeder beliebigen Sicherheitsbeschränkung möglich. Es ist auch möglich mehrere Sicherheitsbeschränkungen für jede der Anwendungen gleichzeitig zu überwachen, d. h. mehrere Fehlerzähler pro Anwendung vorzusehen.

Neben dem unerlaubten Speicherzugriff können beispielsweise alle von einem Java Verifier identifizierten Sicherheitsverletzungen wie falscher Cast, unerlaubter Byte Code, Stack Overflow usw. überwacht werden. Ebenso können Angriffe auf den Algorithmus oder der Versuch der Manipulation von außen, z.B. mittels Elektronenstrahl, überwacht werden.

## Patentansprüche

1. Verfahren des Überwachens von Sicherheitsverletzungen in einem Datenverarbeitungssystem einer Chipkarte, in welcher verschiedene Softwareanwendungen aktivierbar sind, deren Ausführung mindestens einer Sicherheitsbeschränkung unterliegt, **dadurch gekennzeichnet, daß** jeder beschränkten Anwendung ein Fehlerzähler (FZA, FZB) zugeordnet ist, dessen Inhalt nach dem Start der betreffenden Anwendung versuchte Verletzungen der Sicherheitsbeschränkung/Sicherheitsbeschränkungen durch die betreffende Anwendung registriert.

2. Verfahren nach Anspruch 1, bei dem gleichzeitig mehrere Anwendungen aktiviert sind, wobei gleichzeitig zugehörige Fehlerzähler aktiv sind.

3. Verfahren nach Anspruch 1 oder 2, **dadurch gekennzeichnet, daß** von den Fehlerzahlern zumindest einer oder einige zusätzlich zu der Fehlerzahl mit einem Registrierdatum ausgestattet sind.

4. Verfahren nach Anspruch 3, **dadurch gekennzeichnet, daß** ein Rücksetzen des Fehlerzählers abhängig von dem Registrierdatum erfolgt.

5. Verfahren nach einem der Ansprüche 1 bis 4, **dadurch gekennzeichnet, daß** abhängig von dem Stand des jeweiligen Fehlerzählers
a) die zugehörige Anwendung gesperrt wird und/oder
b) das gesamte Datenverarbeitungssystem gesperrt wird und/oder
c) die Software zumindest der zugehörigen Anwendung gelöscht wird.

6. Verfahren nach Anspruch 5, bei dem nach dem Sperren einer Anwendung oder des Datenverarbeitungssystems eine Wiederfreigabe unter bestimmten Voraussetzungen erfolgt.

7. Verfahren nach Anspruch 6, **dadurch gekennzeichnet, daß** die Wiederfreigabe einer Anwendung durch das Datenverarbeitungssystem erfolgt.

8. Chipkarte mit einem Datenverarbeitungssystem, in welchem verschiedene Softwareanwendungen aktivierbar sind, mit einer Überwachung von Sicherheitsverletzungen gemäß dem Verfahren nach einem der Ansprüche 1 bis 7.

9. Chipmodul für eine Chipkarte, das ein Datenverarbeitungssystem implementiert, in welchem verschiedene Softwareanwendungen aktivierbar sind, mit einer Überwachung von Sicherheitsverletzungen gemäß dem Verfahren nach einem der Ansprüche 1 bis 7.

## Claims

1. A method for verifying thickness modulations, in particular watermarks (20), in or on sheet material (10) whereby
- the sheet material (10) is subjected to sound,
- the sound transmitted through the sheet material (10) and/or reflected on the sheet material (10) is measured at a plurality of places (X) on the sheet material (10),
- at least one value (W) characteristic of the transmitted and/or reflected sound is generated for each of the places (X), and
- verification of thickness modulations is done by comparing the values (W) with predetermined reference values (R),
**characterized in that**
the values (W) are compared with the reference values (R) using a correlation factor that is determined by multiplying the individual values (W) by the reference values (R) and averaging the thus obtained results, whereby those values (W) located in the area of disturbances, in particular due to creases, soiling, foreign bodies or wear, of the thickness modulations to be verified are not used for comparison with the reference values (R).

2. A method according to claim 1, **characterized in that** the places (X) where the transmitted or reflected sound is measured are located on at least one track (25) extending linearly on the sheet material (10).

3. A method according to either of claims 1 and 2, **characterized in that** reference values (R) with a periodic pattern are predetermined.

4. A method according to claim 3, **characterized in that** reference values (R) with a sinusoidal pattern are predetermined.

5. A method according to either of claims 3 and 4, **characterized in that** a certain spatial frequency is predetermined for the periodic pattern of the reference values (R).

6. A method according to any of claims 3 to 5, **characterized in that** the values (W) and the reference values (R) are shifted relative to each other before comparison so as to reduce a phase difference possibly present between the values (W) and the reference values (R).

7. A method according to claim 1 or 2, **characterized in that** reference values (R) with a nonperiodic pattern, in particular one containing a coding, are predetermined.

8. A method according to any of claims 1 to 7, **characterized in that** the values (W) and/or the reference values (R) are standardized before multiplying the individual values (W) by the reference values (R).

9. A method according to any of claims 1 to 8, **characterized in that** the correlation factor is compared with at least one predetermined threshold value.

## Revendications

1. Procédé de surveillance d'infraction à la sécurité dans un système de traitement de données d'une carte à puce, dans laquelle différentes applications logicielles sont susceptibles d'être activées, dont l'exécution est soumise à au moins une limitation de sécurité, **caractérisé en ce qu'**à chaque application limitée est associé un compteur d'anomalies (FZA, FZB) dont le contenu enregistre les infractions, tentées après le début de l'application concernée de la ou des limitation(s) de sécurité, par l'application concernée.

2. Procédé selon la revendication 1, dans lequel plusieurs applications sont activées simultanément, les compteurs d'anomalies afférents étant actifs simultanément.

3. Procédé selon la revendication 1 ou 2, **caractérisé en ce que** parmi les compteurs d'anomalies, au moins un ou quelques-uns, en plus du nombre d'anomalies, enregistrent la date d'enregistrement.

4. Procédé selon la revendication 3, **caractérisé en ce qu'**une remise à l'état initial du compteur de défaut se fait en fonction de la date d'enregistrement.

5. Procédé selon l'une des revendications 1 à 4, **caractérisé en ce que**, en fonction de l'état du compteur d'anomalies respectifs,
a) l'application afférente est bloquée et/ou
b) l'ensemble du système de traitement de données est bloqué et/ou
c) le logiciel d'au moins l'application afférente est effacé.

6. Procédé selon la revendication 5, dans lequel après blocage d'une application ou du système de traitement de données, une relibération est effectuée dans des conditions déterminées.

7. Procédé selon la revendication 6, **caractérisé en ce que** la relibération d'une application s'effectue au moyen du système de traitement de données.

8. Carte à puce munie d'un système de traitement de données, dans lequel différentes applications logicielles sont activables avec une surveillance des infractions à la sécurité selon le procédé selon l'une des revendications 1 à 7.

9. Module à puce électronique pour une carte à puce, mettant en oeuvre un système de traitement de données dans lequel différentes applications logicielles sont activables, avec une surveillance des infractions à la sécurité selon le procédé selon l'une des revendications 1 à 7.
